# EUROPEAN PATENT SPECIFICATION

(11) **EP 0 539 691 B1**
(45) Date of publication and mention of the grant of the patent: **15.10.1997**
(21) Application number: 92114750.0
(22) Date of filing: 28.08.1992
(51) Int. Cl.: G02B 21/00

(54) **Nipkow disk for confocal optical scanner**
Nipkowscheibe für konfokalen optischen Scanner
Disque de Nipkow pour dispositif à balayage optique confocal

(30) Priority: 31.10.1991 JP 286112/91; 30.01.1992 JP 15411/92; 09.06.1992 JP 149320/92
(43) Date of publication of application: 05.05.1993
(60) Divisional application: 96102181.3
(73) Proprietor: Yokogawa Electric Corporation, Tokyo 180 (JP)
(72) Inventor: Tanaami, Takeo, Katsushika-ku, Tokyo 124 (JP); Mikuriya, Kenta, Hachioji-shi, Tokyo 193 (JP)
(74) Representative: Henkel, Feiler, Hänzel & Partner

(56) References cited:
- EP-A- 320 760
- WO-A-91/13379
- DE-A- 4 023 650
- DE-B- 2 259 727
- US-A- 4 806 004
- US-A- 4 994 664
- PATENT ABSTRACTS OF JAPAN vol. 15, no. 449 (P-1275)14 November 1991 & JP-A-31 89 601 (YOKOGAWA ELECTRIC CORP.) 19 August 1991

## Description

### BACKGROUND OF THE INVENTION

### Field of the Invention

The present invention relates to a confocal optical scanner used for a confocal microscope and others and more particularly to an arrangement of pinholes, on a pinhole disk structuring the confocal optical scanner, which enables optical scanning without bringing about nonuniformity in brightness at inside and outside periphery thereof and reduces an effect caused by decentering during its rotation.

### Description of the Related Art

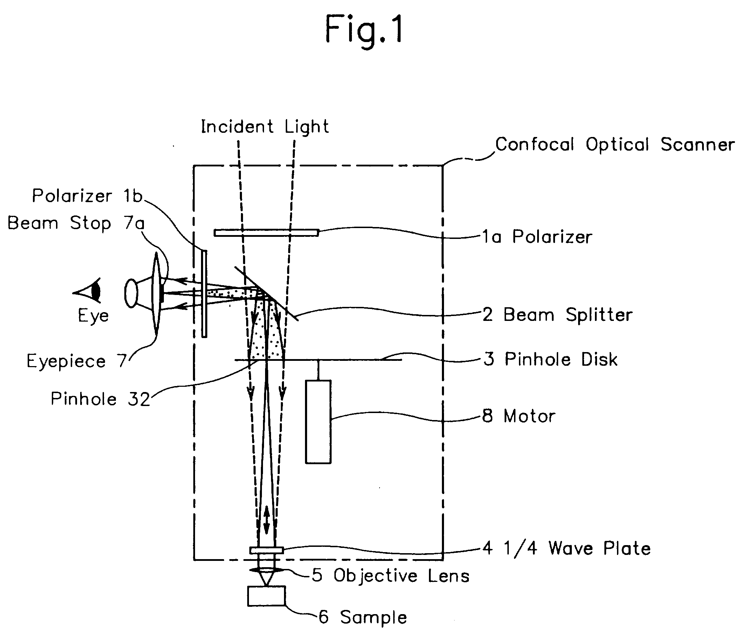

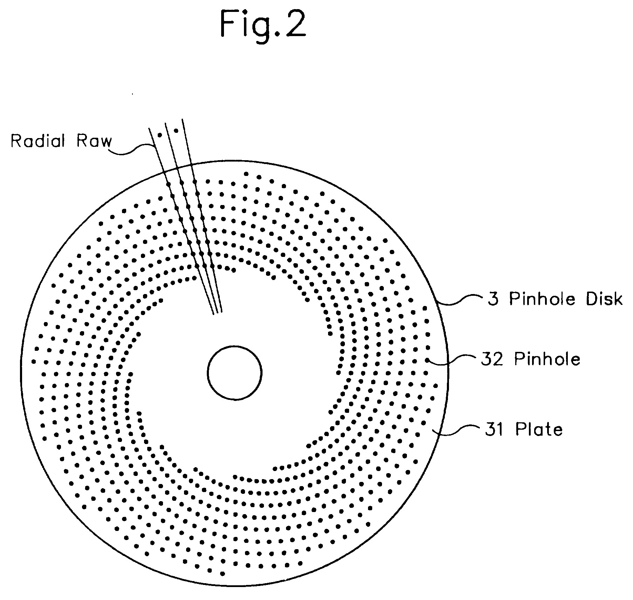

Fig. 1 illustrates an arrangement of one example of a confocal microscope using a confocal optical scanner and Fig. 2 illustrates an example of a conventional pinhole disk used for a confocal optical scanner.

In Figs. 1 and 2, output light from a light source (not shown) is irradiated onto a pinhole disk 3 on which a plurality of pinholes 32 are created in spiral shape on a plate 31 passing through a polarizer la and a beam splitter 2. Among this illumination light, light which has passed through some of the pinholes 32 disposed in spiral shape on the pinhole disk 3 is collected to a sample 6 via a 1/4 wave plate 4 and an objective lens 5. The light reflected from the sample 6 is collected to the pinholes 32 on the pinhole disk 3 passing through the same optical path. The reflected light then goes through the pinhole 32 and the image of the sample 6 may be seen by eyes via the beam splitter 2 and a polarizer 1b and through the intermediary of an eyepiece 7. In this apparatus, the pinhole disk 3 is rotated with a constant speed by a motor 8 and the focusing light point to the sample 6 is scanned by the move of the pinholes 32 due to the rotation of the pinhole disk 3.

However, in the prior art confocal optical scanner as described above, the plurality of pinholes 32 formed in spiral shape on the pinhole disk 3 are disposed isometrically when seen in terms of radial row. This is so due to the reason in fabricating a mask that the pattern of the whole pinhole disk is created by copying the pattern in radial row one by one in equal angle. Accordingly the pitch between the pinholes at the outer periphery of the pinhole disk is wider than the pitch at the inner periphery thereof. That is, it is darker at the outer periphery and brighter at the inner periphery in terms of light amount transmitting through the pinhole disk, so that nonuniformity in brightness is caused in performing optical scanning at the inside and outside periphery of the pinhole disk.

Further, when the center of the pattern of the plurality of pinholes 32 formed on the pinhole disk 3 in spiral shape and the center of rotation of the pinhole disk 3 (center of the motor 8) drift from each other, stripes are developed on an image plane when one image plane is constructed by one scanning.

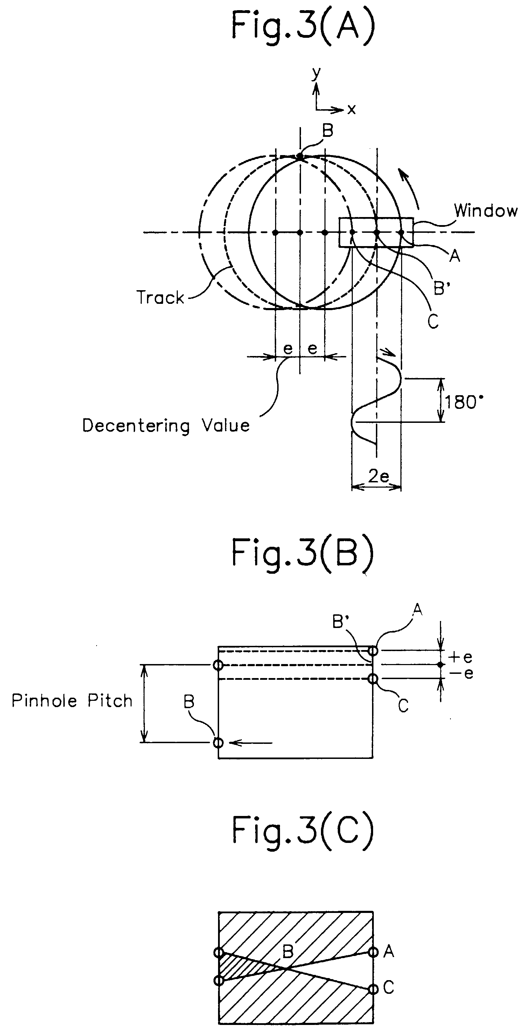

The stripes are developed by the following reason: as shown in Fig. 3A, when a track (assumed as a circle) rotating with decentering value e is observed through a window, x coordinate of an observation point A draws a cycloid (approximately a sine curve) whose amplitude changes by 2e in 180°. Here, consider a case when it is measured so that scanning of one image plane is constructed by 90°. When scanning is started from point B in Figs. 3A and 3B, the radius increases by e till arriving to point A. Accordingly, whereas point B' of pinhole pitch should be originally scanned in one image plane scanning of 90°, it passes through point A whose radius is greater by decentering value e than point B'. Accordingly, the interval between points B' and A is excessively scanned, thereby whitening the image plane. Contrary to that, when the interval between points B' and C is scanned, scanning is not enough, thereby blackening the image plane. In reality, the scanning is carried out in arc, the stripe caused by the decentering takes the shape as shown in Fig. 3C.

It is necessary to fully reduce the decentering value to eliminate such stripe. Although the stripes caused by the decentering may be reduced even if the decentering is great by constructing one image plane by more than two times of scanning, S/N is worsened. Conventionally, it has been very difficult to adjust this decentering value and naturally, separation and exchange of the pinhole disk and the motor has been impossible.

Further, when light is irradiated from a light source (not shown) onto the pinhole disk 3 having a plurality of pinholes 32 disposed in spiral shape whose aperture area is 1 % for example, only 1% of the whole light irradiated to the pinhole disk 3 pass through the pinholes 32; luminous utilization efficacy has been so bad as 1 %.

Still more, great amount of light is reflected from the surface of the pinhole disk 3, becoming stray light. Although a beam stop 7a on the eyepiece 7, a polarizer la, and 1/4 wave plate 4 have been used in order to eliminate the stray light, it has been difficult to completely eliminate the stray light and it has been the cause of the high price of the apparatus.

An optical scanner having the above-mentioned features is disclosed in EP-A-0 320 760. There is described a tandem scanning microscope using a modified Nipkow disk design. The apertures in the disk are in an annular pattern of several arms. Each aperture is located along a spiral arm at the end of a radius vector. Relative aperture locations are established in accordance with a mathematical relationship. However, the pitch between the pinholes at the outer periphery of the pinhole disk is wider than the pitch at the inner periphery thereof. Thus, the outer periphery is darker than the inner periphery of the pinhole disk and non-uniformity in brightness is caused. Furthermore, stripes on the image plane appear if the center of the pinhole pattern differs from the center of rotation of the pinhole disk.

### SUMMARY OF THE INVENTION

Accordingly, it is a primary object of the present invention to overcome the problems of the aforementioned prior art technology by providing an arrangement of pinholes which enables optical scanning without bringing about non-uniformity in brightness at inside and outside periphery of the pinhole disk.

A second object of the present invention is to provide an arrangement of pinholes through which stripes are hardly developed even if decentering is great.

To attain this object according to this invention there is provided a confocal optical scanner as disclosed in claim 1. Further favourable developments of this scanner are defined by the dependent claims.

### BRIEF DESCRIPTION OF THE DRAWINGS

The foregoing objects and advantages will be evident when proceeding through the following detailed description of illustrated embodiments of the invention, particularly when considered in connection with the accompanying drawings, wherein the same reference numeral designates the like or corresponding part throughout several views, in which
Fig. 1 illustrates an arrangement of one example of confocal microscope using a confocal optical scanner;
Fig. 2 is a prior art example of a pinhole disk used for the confocal optical scanner;
Figs. 3A, B and C are diagrams for explaining the development of stripes due to decentering;
Fig. 4 is a drawing of a pinhole pattern illustrating a first embodiment of the confocal optical scanner according to the present invention;
Figs. 5A - 5E are diagrams for explaining the arrangement of the pinholes in Fig; 4;
Fig. 6 is a drawing of a pinhole pattern illustrating a second embodiment of the confocal optical scanner according to the present invention;
Figs. 7A - 7C are diagrams for explaining the pinhole arrangement in Fig. 6;
Fig. 8 is a diagram showing a scanning order when the pinhole pattern in Fig. 6 is rotated;
Fig. 9 is a diagram for explaining the reduction of drift caused by decentering with the pinhole arrangement in Fig. 6;
Figs. 10A and B are diagrams showing a scanning order and drift caused by decentering by a modified embodiment of the pinhole arrangement in Fig. 6;
Fig. 11 is a modified embodiment of the pinhole arrangement in Fig. 6;
Figs. 12A and B illustrate a structure of a pinhole disk showing a third embodiment of the confocal optical scanner according to the present invention;
Fig. 13 illustrates a structure of an apparatus in which the pinhole disk in Fig. 12 is used for a confocal microscope;
Fig. 14 is a modification of the pinhole disk in Fig. 12;
Fig. 15A and B illustrates a structure of a pinhole disk showing a further development of the confocal optical scanner;
Fig. 16 is a modification of the pinhole disk in Fig. 12;
Fig. 17 is a drawing for explaining the operation of the apparatus in Fig. 13;
Fig. 18 illustrates a structure of a still further development of the confocal optical scanner;
Figs. 19A and B illustrate a structure of a collector disk and pinhole disk used for the scanner in Fig. 18;
Figs. 20A and B illustrate a structure of a branch optical system used for the scanner in Fig. 18;
Fig. 21 is a modification of the confocal optical scanner of Fig. 18; and
Fig. 22 is an enlarged structural drawing of a collector disk of a confocal optical scanner.

### DETAILED DESCRIPTION OF PREFERRED EMBODIMENTS

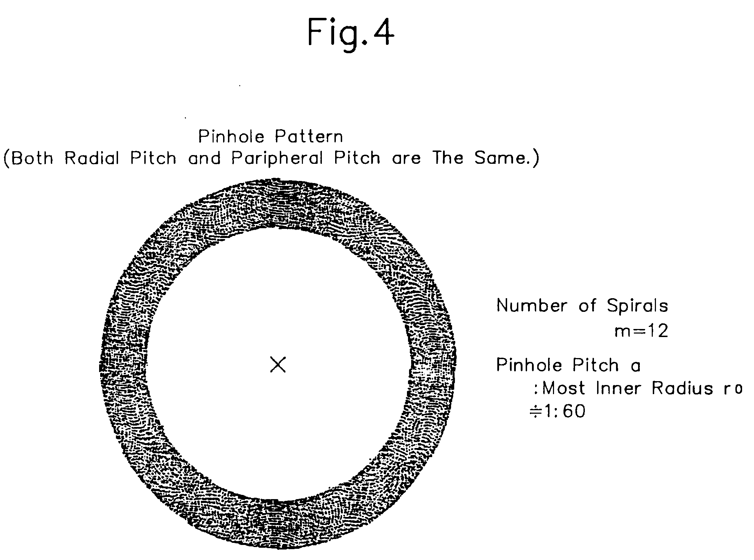

Fig. 4 is a drawing of pinhole pattern according to a first embodiment of a confocal optical scanner of the present invention. This pinhole arrangement features in that more than one threads of pinhole rows are disposed in spiral shape and that the radial pitch of a track of an imaginary center line connecting the centers of a plurality of pinholes structuring the pinhole rows and peripheral pitch along the spiral are equal. In concrete, this pattern is drawn according to the following expressions (1) and (2):${\text{r}}_{\text{i}} {\text{= r}}_{\text{o}} \text{+ θi*m*a/2π}$${\text{θi = {2π/(m*a)}{-r}}_{\text{o}} {\text{+ √(r}}_{\text{o}} {\text{}}^{\text{2}} {\text{+ i*m*a}}^{\text{2}} \text{/π)}}$ where
i = 0, 1, 2, ..., n (order from inside of spiral)
ri: radius of i-th pinhole as measured from the center of the disk,
ro: most inner radius,
θi: angle of i-th pinhole,
m: number of spirals,
a: pinhole pitch; and
as drawing conditions,
pinhole pitch a : radius of most inner periphery of spiral ro = about 1 : 60, and
number of spirals m = 12

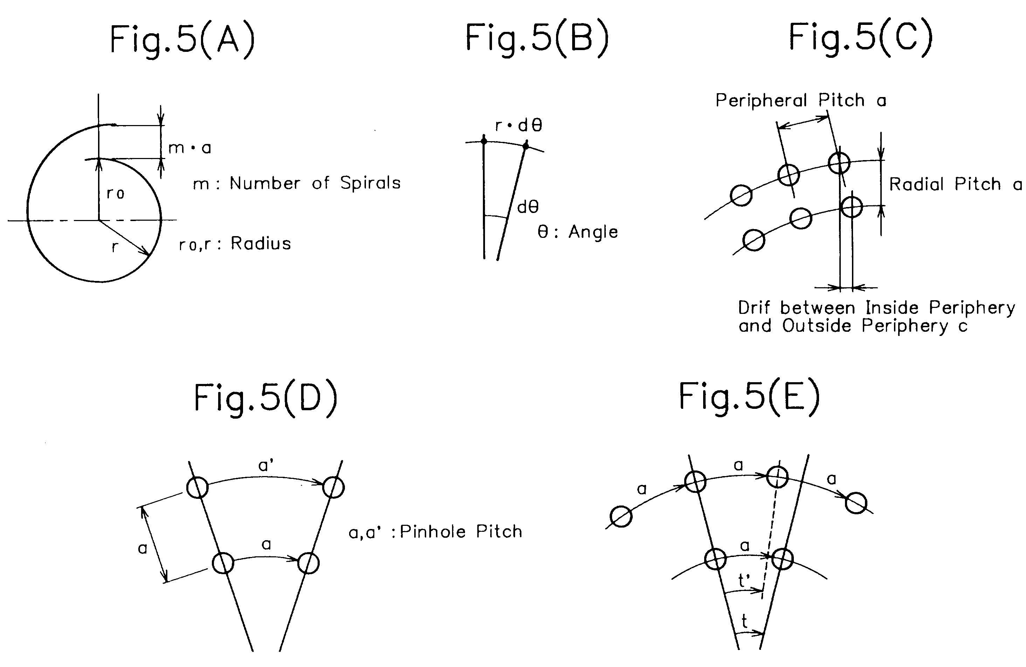

Now the equations (1) and (2) will be explained. As shown in Figs. 5A and 5B, when the pinhole disk rotates one circle, the radius becomes larger by m*a between the starting point and ending point of the track of the spiral. Therefore the radius r is:$\text{r = ro + θ*m*a/2π}$ And length of arc l is; 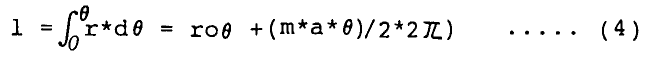 When equation (4) is represented in terms of θ ;${\text{θ = {2π/(m*a)}{-r}}_{\text{o}} {\text{+ √(r}}_{\text{o}} {\text{}}^{\text{2}} \text{+ m*a*1/π)}}$ From equation (5) and the following equation (6),$\text{l = i*a}$ the following equation is obtained;${\text{θ = {2π/(m*a)}{-r}}_{\text{o}} {\text{+ √(r}}_{\text{o}} {\text{}}^{\text{2}} {\text{+ i*m*a}}^{\text{2}} \text{/π)}}$ The drawing of the pinhole pattern in Fig. 4 is drawn using equations (7) and (4) according to the aforementioned drawing conditions.

The pinhole arrangement shown in Fig. 4 is formed by the pinhole pitch a which is equal both in the radial and peripheral directions as shown in Fig. 5C. That is, when the diameter changes by one pitch (a), though a drift c with the inside periphery is caused, the number of pinholes per unit area is not changed. Accordingly, the density is equal to what pinholes are arranged in square and the density becomes constant regardless of the radius.

Then, when the pinhole disk is rotated and light amount per one pinhole is assumed to be I (W: watt), the pinhole scans a range with a width (a) and length (a) to the neighboring pinhole and illuminance E is expressed as follows;${\text{E = I/a}}^{\text{2}} {\text{[W/m}}^{\text{2}} \text{]}$

In the conventional pinhole disk having isometrical arrangement (for example in Fig. 2), scanning distance within unit time (distance to neighboring pinhole) a' is greater than the length of the inner peripheral arc a as shown in Fig. 5D, and accordingly, illuminance E' at the outside periphery is smaller than illuminance E at the inside periphery. Whereas that, on the pinhole disk with equal pitch arrangement of the present invention, the same length arc a is scanned both at the inside and outside periphery as shown in Fig. 5E. Accordingly, the illuminance is constant regardless of the radius of the inside and outside periphery. That is, if it takes t seconds to scan one pitch at the inside periphery and takes t' seconds (< t) to finish scanning the outside periphery, the neighboring pinhole illuminates the remaining t' - t seconds, thereby causing the light amount at the inside and outside periphery constant.

As described above, the pinholes on the pinhole disk structuring the confocal optical scanner are arranged so that both radial pitch and peripheral pitch are equal along the track of the spiral in the first embodiment of the confocal optical scanner of the present invention, so that no nonuniformity in brightness is brought about during optical scanning at the inside and outside periphery.

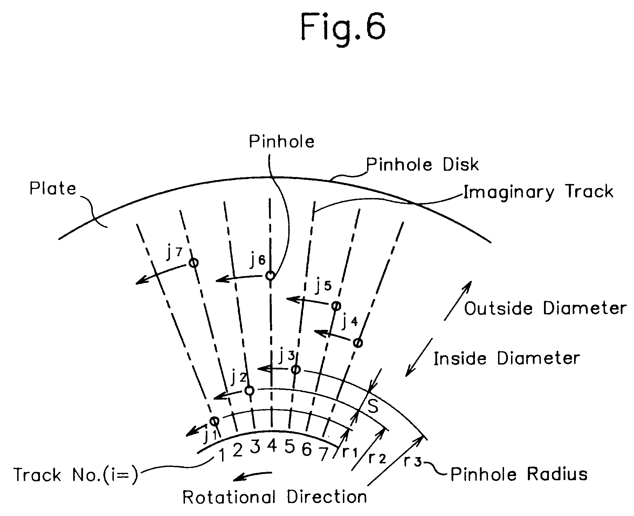

Fig. 6 is a drawing of a pinhole pattern illustrating a second embodiment of a confocal optical scanner according to present invention. This pinhole arrangement features in that one image plane is scanned with a plurality of pinhole rows and that pinholes are disposed so that radius of center position of all the pinholes structuring the plurality of pinhole rows on one image plane differ from each other. In concrete, radial imaginary tracks are presumed on a plate as shown in Fig. 6 and pinholes are disposed at arbitrary radius on the imaginary track. One image plane is constructed by scanning N pinholes. For this pinhole group, numbers are indexed as follows (N = 7 in Fig. 6):
Rotational direction (imaginary track N0): i = 1, 2, ..., N
Radial direction (from inside): j₁, j₂, *...,* j_{N}
Moreover, radius of each pinhole is indexed in the radial direction (j direction) as r₁, r₂, ..., r_{N}. By the way, an increment of radius s is assumed to be constant between all the pinholes. That is;${\text{r}}_{\text{j}} {\text{+ 1 = r}}_{\text{j}} \text{+ s}$ where, r₁ = rₒ + s

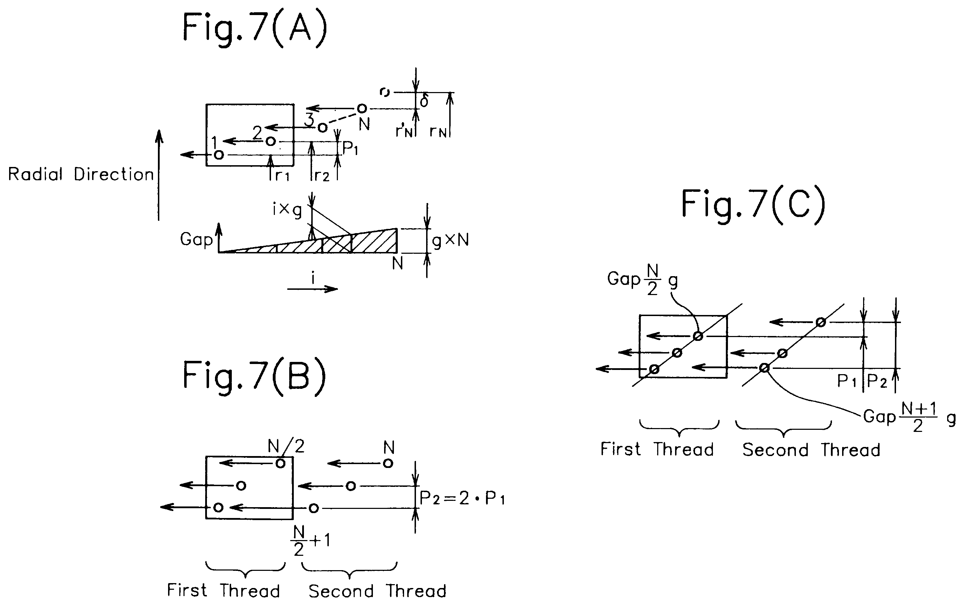

In such pinhole arrangement, when scanning is carried out with the conventional pinhole rows (spiral shape) whose radius monotonously increase, drift δ (= g * i) caused by decentering gradually becomes great as shown in Fig, 7A due to the gap g between neighboring pinholes caused by the decentering in proportional to the rotational direction (track No.) i and at the last pinhole (i = N), the drift due to the decentering becomes as δ = g ∗ N, resulting in scanning r_{N}' by being drawn back by the decentering though r_{N} has to be scanned originally. If the scan pitch p₁ is increased by two times to p₂ (= 2 * p₁) as shown in Fig. 7B, one image plane is constructed by two threads. Then the upper most one is scanned at the N/2-th pinhole and the drift due to the decentering at this time is g ∗ N/2. The drift is reduced more than one constructed by one thread. However, this invites a problem that the picture quality becomes coarse because the scanning pitch is doubled. If the center radius of the pinholes of the second thread is drifted as a whole by p₁ from the first thread as shown in Fig. 7C, the gap between the first thread is scanned. Thereby, the effect of the decentering is reduced while keeping the same picture quality with one constructed by one thread. The thread is not limited to two, but may be multiple threads composed of more than three threads. If the number of threads is monotonously increased one by one to ultimate number, it becomes N threads. That is, since radius of neighboring pinholes may be determined independently, a pattern that minimizes the effect of decentering may be selected. For a circular pattern, it becomes a radial isometrical pitch. This has resulted in the pinhole arrangement shown in Fig. 6.

In the pinhole arrangement in Fig. 6, the pinholes are disposed so that ones at the inside diameter side are odd number ones and ones at the outside diameter side are even number ones in the order of scanning of the pinholes which are indexed with numbers in the rotation angle direction and so that the radius monotonously increase at the inside diameter side and to reduce at the outside diameter side under the following conditions (N is assumed to be odd number and N/2 is rounded up.)
(1) where 1≤ j ≤ N/2 (half of inside diameter side): radius where pinhole is disposed:${\text{r}}_{\text{j}} {\text{= r}}_{\text{o}} \text{+ s * j}$ track No. where pinhole is disposed:$\text{i = 2j - 1}$
(2) where N/2 < j ≤ N (half of outside diameter side): radius where pinhole is disposed:${\text{r}}_{\text{j}} {\text{= r}}_{\text{o}} \text{+ s * j}$ track No. where pinhole is disposed:$\text{i = N - {(2j - N/2) - 1}}$

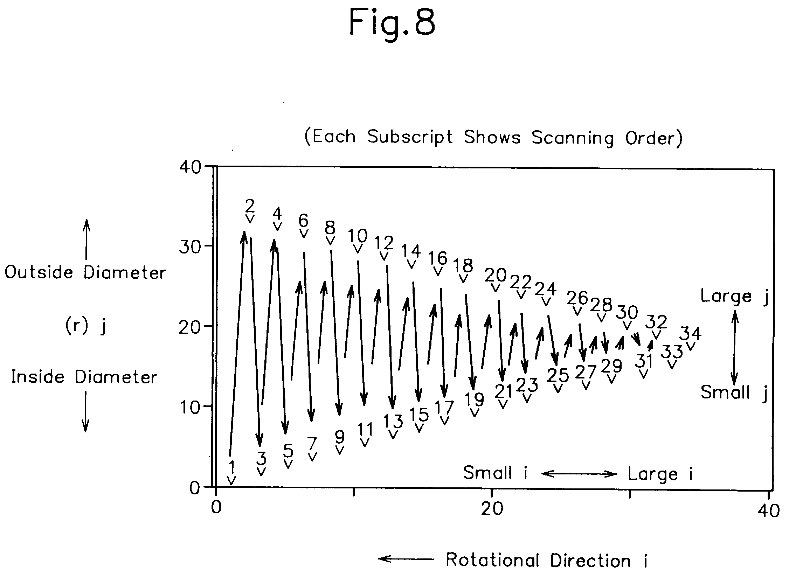

When the pinhole disk on which pinholes are disposed as such is rotated by mounting to a motor and the like, scanning is carried out in the sequence as shown in Fig. 8. Fig. 8 illustrates a case when N = 34. Here, consider a case when r' which is different from true radius r is scanned due to decentering e. Generally, a plurality of image planes are measured by one rotation of the pinhole disk (16 threads = 16 image planes/round in the example of Fig. 2), so that drift value of radius position due to decentering within one image plane (or gap between neighboring pinholes) monotonously increases or decreases against the angle. When the gap between neighboring pinholes is g [micrometer/pinhole], the drift of radius position of the j-th pinhole from the inside diameter side is calculated as follows;${\text{r}}_{\text{j}} {\text{' = r}}_{\text{j}} \text{+ i * g}$

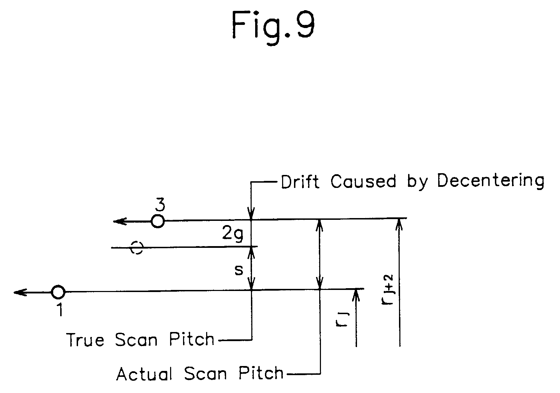

By the way, in the arrangement of pinholes shown in Fig. 8, scanning order (order of i) of pinholes heading from inside periphery to outside periphery (order of j) is drifted two by two. For example, whereas i = 1, 2, 3, ..., the bottom row is j = 1, 3, 5, ... and the upper row is j = 32, 30, 28, .... Accordingly, the drifts δ from the true radius r caused by decentering e are all below 2g as shown in Fig. 9. When expressed in an equation, the inside diameter side becomes constant regardless of the diameter, as follows;${\text{r}}_{\text{j + 1}} {\text{' - r}}_{\text{j}} {\text{' = (r}}_{\text{j}} {\text{+ s + 3 * g) - (r}}_{\text{j}} \text{+ 1 * g)} \text{= s + 2g (= s + δ )}$ That is, it may be reduced to 2g by distributing width of the stripes which has been g * N as a whole. The gap g of r_{j + 1} is larger than rⱼ because j increases by 1 in equation (10) and it becomes as follows;${\text{i}}_{\text{j + 1}} {\text{- i}}_{\text{j}} \text{= {2(j + 1) - 1} - (2j-1) = 2}$ Similarly, j increases by 1 in equation (12) at the outside periphery side and it becomes as follows;${\text{i}}_{\text{j + 1}} {\text{- i}}_{\text{j}} \text{=} \text{N - {2((j + 1) - N/2) -1} - [N-{2(j - N/2) - 1}]} \text{= -2}$ As a result, it becomes 2g at the inside periphery side and a wider area than in a case when no decentering exist is scanned, so that the image is darkened. Similarly, it becomes -2g at the outside periphery side, and the image is brightened. The drift δ (width of stripe) caused by decentering e is 4g altogether.

Here, if one image plane is constructed by scanning pinholes of N = 34 and drift per one image plane due to decentering e' = 34 micrometer, conventionally the width of stripe has been δ = e' = 34 micrometer. According to the present invention, however, δ = 4g = 4 * e'/N = 4 micrometer. That is, it becomes about 1/8. If N is increased, the effect is also enhanced and the effect becomes 4e/N.

Although the pinholes which have been indexed with numbers one by one in the rotation angle direction have been disposed so that ones at the inside diameter side are odd number ones and ones at the outside diameter side are even number ones in the order of scanning and so that the radius increases monotonously at the inside diameter side and decreases monotonously at the outside diameter side in the aforementioned embodiment, the drift value (width of stripe) of radius position caused by decentering may be reduced to 4g in the same manner with the aforementioned embodiment even if the pinholes are disposed as follows:
(1) ones at the inside diameter side are odd number ones and ones at the outside diameter side are even number ones in the order of scanning and the radius monotonously decreases at the inside diameter side and increases at the outside diameter side,
(2) ones at the inside diameter side are even number ones and ones at the outside diameter side are odd number ones in the order of scanning and the radius monotonously increases at the inside diameter side and decreases at the outside diameter side, and
(3) ones at the inside diameter side are even number ones and ones at the outside diameter side are odd number ones in the order of scanning and the radius monotonously decreases at the inside diameter side and increases at the outside diameter side.

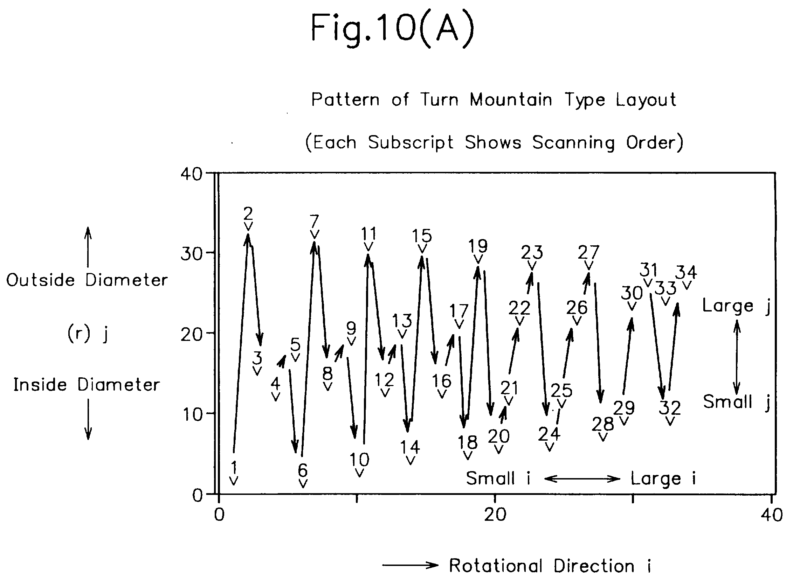

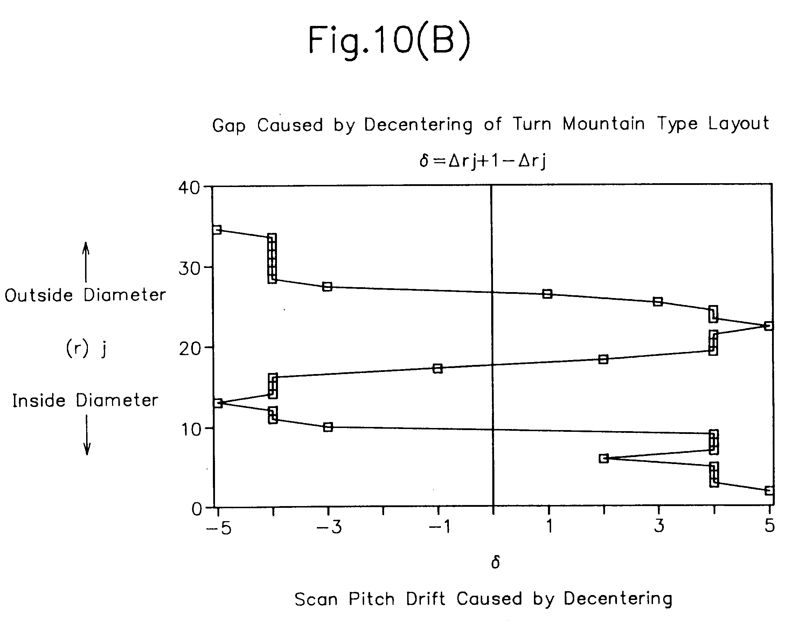

Even in a twin-peaks arrangement as shown in Fig. 10A, not in the single peak arrangement as shown in the aforementioned embodiment, the drift value δ of the radius position caused by decentering may be also reduced to about δ = 10g as shown in Fig. 10B. For example, if N = 34, width of the stripe is reduced to about 1/3.

In short, the width of the stripe developed by decentering may be reduced by scanning one image plane by a plurality of pinhole rows and by disposing pinholes so that radius of center position of all the pinholes structuring the plurality of pinhole rows on the one image plane differ from each other.

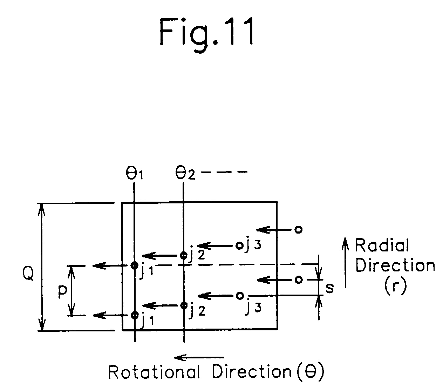

Next, when one image plane is to be scanned, the speed of the measurement may be increased by using a plurality of pinholes in the same time, not one pinhole as shown in the aforementioned embodiment. For example, consider a case when pinholes are disposed radially and two pinholes are separated by pitch p in the same angle θᵢ (i = 1, 2, ..., Nₘ) as shown in Fig. 11. In this case, radius of a pinhole in the next angle θ_{i + 1} is located at position drifted by scan pitch s. When this is considered as j₁, j₂, ... j_{N}, a number of pinholes N necessary for constructing one image plane may be expressed as follows;${\text{N}}_{\text{m}} \text{= p/s [number of pinholes]}$ In multi-pinhole structure, measurement of one image plane is completed always when scanning is carried out by Nₘ in the angular direction regardless of the value of size of visual field Q. In the single pinhole (one pinhole on the same angle θ ) structure, it takes Nₘ times of time when scanned. Accordingly, it may be considered that one block is structured by p [micrometer] in the radial direction and Nₘ [number of pinholes] in the peripheral direction. In the case of the multi-pinhole structure, this block may be handled as one image plane and the speed of the measurement may be increased. In such multi-pinhole structure, the pinhole arrangement structured as shown in the aforementioned embodiment may be embodied together and the width of the stripe developed by decentering may be reduced and the speed of the measurement may be increased.

As described above, according to the second embodiment of the confocal optical scanner of the present invention, one image plane is scanned by a plurality of pinhole rows and the pinholes are disposed so that the radius of the center position of all the pinholes structuring the plurality of pinhole rows on the one image plane differ from each other, so that the development of the stripes may be suppressed even if the decentering is great.

Then, when pinholes are disposed in isometric pitch as seen in the aforementioned embodiment, i.e. when the pinholes are disposed on radial imaginary tracks, nonuniformity in brightness is induced during optical scanning because interval of the imaginary tracks is always widened more at the outside peripheral side than the inside peripheral side even if the scan order is in spiral shape and light amount (density) is decreased at the outside peripheral side as compare to the inside peripheral side. As a pinhole arrangement for eliminating such nonuniformity in brightness during optical scanning, the pinhole arrangement of the first embodiment of the present invention may be used. An explanation thereof is omitted here. Now consider that the imaginary track is a band having a constant width and is disposed in a way coiled toward the inside. In this case, the outside periphery of the imaginary track is reduced as compared to one in which pinholes are disposed in isometrical angular pitch. Moreover, if multi-pinhole row on the imaginary track is arranged with equal pitch of pitch p, the distance between pinholes is constant regardless of the diameter. Especially if the pitch p and the width of the imaginary track is equal, the density becomes equal to the case where pinholes are disposed in square. By the way, curvature of the spiral is generally fully large, so that it is almost linear and the influence of the curve may be ignored within the range of pitch p. As a result, the pinholes may be disposed so that the nonuniformity in brightness at the inside and outside periphery of the pinhole disk is eliminated. In such case also, the pinhole arrangement structured as shown in the aforementioned embodiment may be embodiment together and the width of the stripes developed by decentering may be reduced and optical scanning without nonuniformity in brightness at the inside and outside periphery of the pinhole disk is made possible.

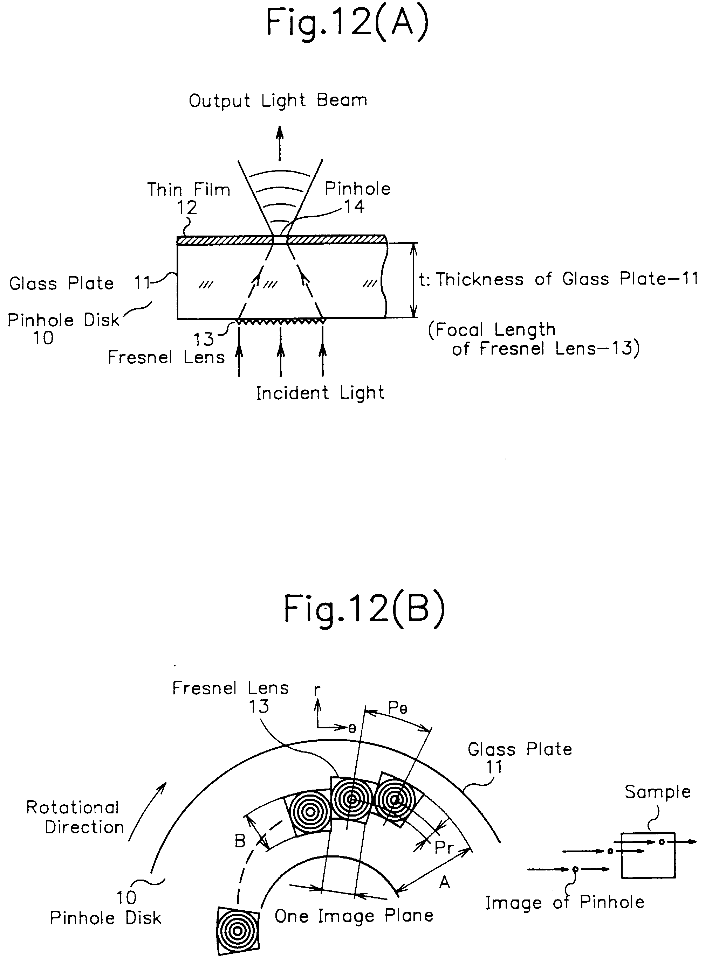

Figs. 12A and B illustrate a structure of a pinhole disk showing a third embodiment of the confocal optical scanner according to the present invention. In Fig. 12A, a thin film 12 is formed on one side of a glass plate 11 and a Fresnel lens 13 is formed on the other side of the glass plate 11. Thickness t of the glass plate 11 is the same with a focal length of the Fresnel lens 13 formed on one side of the glass plate 11 and a pinhole 14 is provided at the focal position of the Fresnel lens 13 on the thin film 12. Here, positioning of the Fresnel lens 13 and the pinhole 14, i.e. the formation of the pinhole 14, is carried out by means of a semiconductor mask pattern. Beside that, it may be carried out by evaporating, decoloring or etching the thin film by inputting high intensity laser beam from the side of the Fresnel lens 13. Thereby the positioning on the thin film 12 may be carried out easily and the pinhole 14 is formed at the collector position of the Fresnel lens 13. Moreover, as shown in Fig. 12B, a plurality of Fresnel lenses 13 formed on one side of the glass plate 11 are formed by drifting their focal position one by one by Pr by one image plane in the radial direction so that an image of the pinholes may scan the sample when the pinhole disk 10 is rotated with a constant speed.

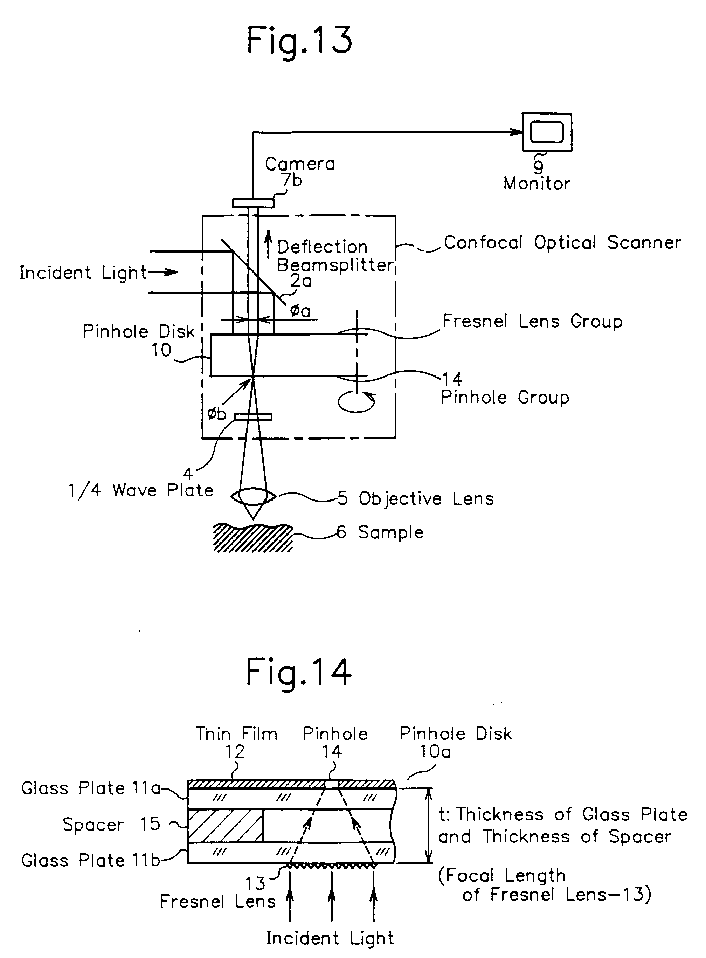

Here Fig. 13 illustrates a structure of an apparatus in which the pinhole disk in Fig. 12 is used for a confocal microscope. In Fig. 13, output light (this may be white light, not only laser light) from a laser light source (not shown) is input on the pinhole disk 10 as parallel light by a beam splitter 2. The light input to the pinhole disk 10 is collected at an inlet of the pinhole 14 formed at the collector position of the Fresnel lens 13 by the Fresnel lens 13 as shown in Fig. 12A and more light is collected through the intermediary of the Fresnel lens 13. Returning to Fig. 13, the light that has passed through the pinhole 14 is irradiated to the sample 6 by an objective lens 5 after passing through a 1/4 wave plate 4. The reflected light from the sample 6 again passes through the pinhole disk 10 and input to a light receiver (camera) 7b through the intermediary of a deflection beam splitter 2a and an image of the sample 6 is displayed on a monitor 9. In this embodiment, the pinhole disk 10 is rotated with a constant speed by a motor (not shown) and an image of the pinhole 14 scans the sample 6 due to the rotation of the pinhole disk 10. Further, since the pinhole 14 on the pinhole disk 10 and light spot on the sample 6 (the image of pinhole) have a confocal relationship and both the incident light from the laser light source and the reflected light from the sample 6 pass through the pinhole 14, high resolution may be obtained due to the confocal effect.

By the way, the light receiver 7b may be an eyepiece, not only a camera, and observation through eyes is possible in the aforementioned embodiment. Further, for the light receiver, a photodiode or high sensitive photomultiplier may be used by using one beam per one image plane. Still more, the deflection beam splitter of the confocal optical scanner may be a half-mirror (1/4 wave plate becomes unnecessary) and by using a dichroic mirror (1/4 wave plate becomes unnecessary) for the deflection beam splitter, fluorescent of the sample may be also measured. Furthermore, the number of beams may be increased as multiple beams, not only one per one image plane, and light amount in one image plane and the speed may be increased.

Several arrangements of pinhole disk and collector means are set out below. These different arrangements serve for better understanding the possibility of using collector means, but do not fall within the scope of protection of the present invention.

Fig. 14 is a modification of the pinhole disk in Fig. 12. In the figure, the pinhole 14 and the Fresnel lens 13 formed on the thin film 12 are'formed separately on the glass plateslla and llb which are combined through the intermediary of a spacer 15 so that the pinhole 14 is positioned at the focal position of the Fresnel lens 13.

In this embodiment also, incident light is collected at the inlet of the pinhole 14 formed on the focal position of the Fresnel lens 13 by the Fresnel lens 13 similarly to the case in Fig. 12 and more light is collected by the Fresnel lens 13, so that luminous utilization efficacy may be improved and its fabrication becomes easier as compared to one in Fig. 12 since the thin film 12 and the Fresnel lens 13 may be formed on separate glass plates.

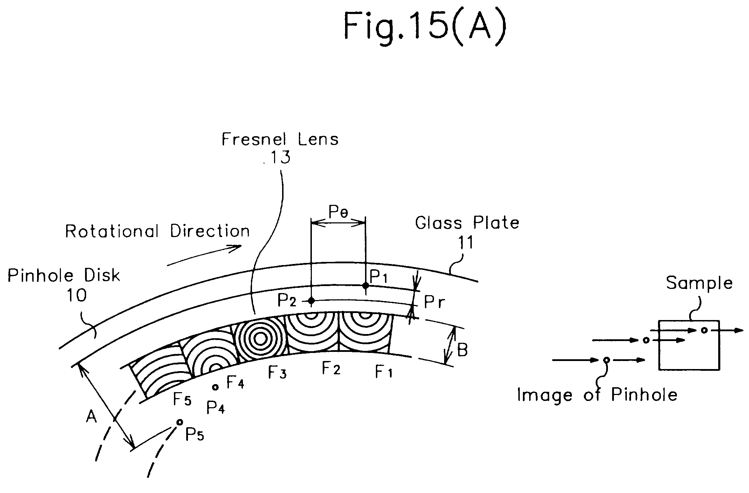

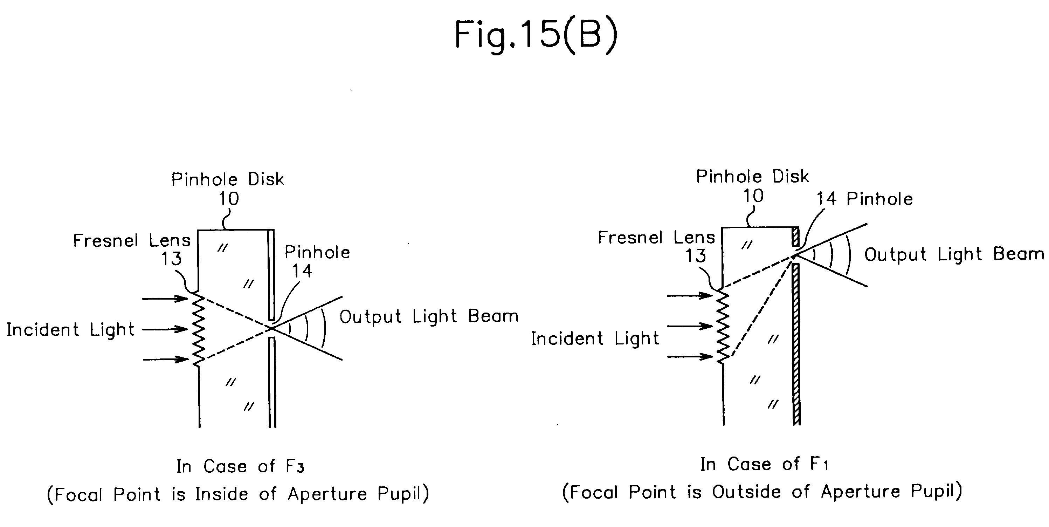

Figs. 15A and B illustrate a structure of another pinhole disk of a confocal optical scanner according to the present invention. In Fig. 15A, the Fresnel lenses 13 (F1, F2, F3, ...) are structuring a Fresnel lens group in which they are arranged in row in the circumferential direction having a constant width (width of aperture pupil of Fresnel lens) in the radial direction. As shown in Fig. 15B, this Fresnel lens group contains ones whose focal point of the Fresnel lens 13 is outside of aperture pupil width B of the Fresnel lens (F1, F2, F4, and F5 in the figure) beside ones whose focal point of the Fresnel lens 13 is inside of the aperture pupil of the Fresnel lens (F3 in the figure). Here, a Fresnel lens whose focal point is outside of the aperture pupil B, or Fresnel lens F1 for example, is formed by presuming a large Fresnel lens whose focal point P1 is made into rotation symmetry and by using a pattern wherein the peripheral portion thereof is cut. Moreover, illumination range in the radial direction of illumination light irradiated to the pinhole disk 10 is limited only to the width in the radial direction of the Fresnel lens 13.

By structuring as described above, the Fresnel lenses are formed by drifting by Pr in the radial direction one by one by one image plane so that image of the pinhole may scan the sample when light is irradiated to the pinhole disk rotating with a constant speed in Fig. 12. Accordingly, although illumination light is necessary to illuminate the whole A dimension in the radial direction, light is illuminated on the sample only by the width of the aperture pupil B of the Fresnel lens, so that the luminous utilization efficacy becomes B/A and is improved as compared to the prior art example, it has not been enough. The luminous utilization efficacy is further improved overcoming this problem in.Fig. 15. Returning to Fig. 15, along the rotation of the pinhole disk 10, the focal point Pi (i = 1, 2, ...) scans the sample. In this case, although the illumination range in the radial direction of the illumination light irradiated to the pinhole disk 10 is limited only to the width B in the radial direction of the Fresnel lens 13, the image of pinhole can scan the range of A in the radial direction on the sample. Accordingly, light illumination area may be reduced and the luminous utilization efficacy becomes B/B and is further improved as compare to the case in Fig. 12.

For the Fresnel lens used for the confocal optical scanner shown in the aforementioned embodiment, a Fresnel zone plate composed of a plurality of patterns with variable density and phase difference disposed cocentrically and alternately may be used, though it accompanies a decrease of light amount, beside the one having a saw tooth section. Further, the glass plate may be made of plastic and injection molding may be applied.

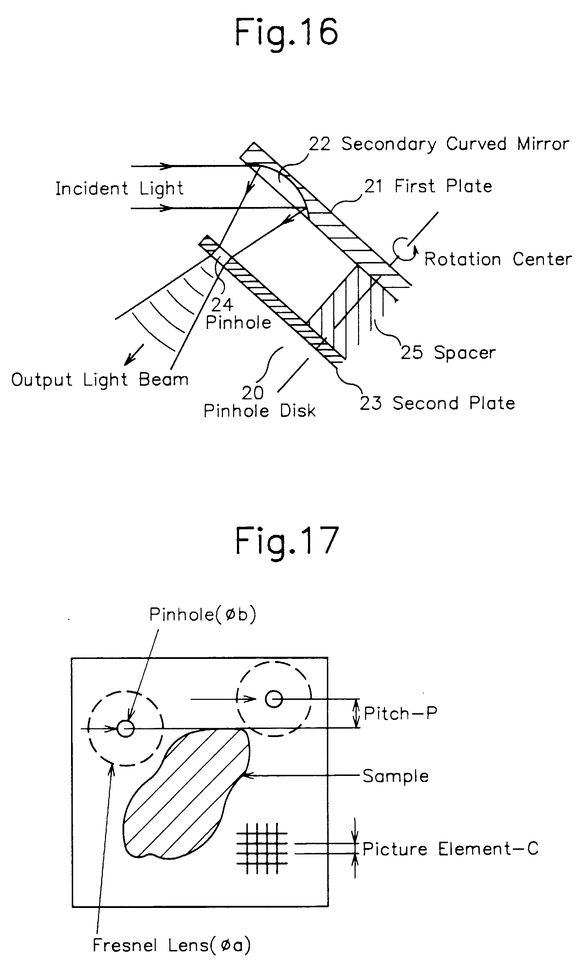

Fig. 16 is a modification of the pinhole disk in Fig. 12. In Fig. 16, a plurality of secondary curved mirror 22 are created in spiral shape at the outside peripheral portion of one side of a first plate 21. The same number of pinholes 24 with the plurality of secondary curved mirrors 22 are created in spiral shape on the outside peripheral portion of a second plate 23. The first plate 21 and the second plate 23 are combined by a spacer 25 for example having the same rotation center so that the pinholes 24 are disposed respectively at focal position of the secondary curved mirrors 22. A pinhole disk 20 rotates with a constant speed and images of the pinholes scan the sample.

In such structure, when light from a light source (not shown) is input to the secondary curved mirror 22 of the pinhole disk 20, its reflected light is collected at the inlet of the pinhole 22 disposed at the focal position of the secondary curved mirror 22. Accordingly, more light may be collected and the luminous utilization efficacy may be improved. Further, since no lens is used as light collecting means as compare to ones in Figs. 12 and 15, it receives no influence of chromatic aberration due to the lens. Accordingly, since there is no limitation in wavelength used, simultaneous illumination of multi-wavelength using RGB laser and the like becomes possible. Color image also may be obtained and the use of ultraviolet ray becomes easy. By the way, the collection of light at the outside of light axis shown in Fig. 15 is also possible with this structure of the secondary curved mirror.

By the way, in the third embodiment, light collecting efficiency is increased and luminous utilization efficacy is improved by disposing pinholes on the pinhole disk and light collecting means as shown in the aforementioned first or second embodiment. Further, optical scanning without nonuniformity in brightness at the inside and outside periphery of the pinhole disk is realized and the width of stripes caused by decentering may be reduced.

Further, in the aforementioned embodiment, for the light collecting means of the pinhole disk structuring the confocal optical scanner, a micro convex lens type micro lens or a refractive index distributed plate micro lens which is formed by doping a material having a high refractive index into a plate having a low refractive index may be used instead of the Fresnel lens or the secondary curved mirror, and the same effect may be expected.

On the other hand, in Fig. 13, since the light which reflected at the sample 6 and transmits the pinhole disk 10 again returns to parallel light, when the return light from the sample 6 enters the pinhole 14 on the pinhole disk 10, the light diaphragmed to φb becomes a parallel light with φa and becomes large after passing through the Fresnel lens 13 on the pinhole disk 10. For example, as shown in Fig. 17, if size of picture element c is b < c < a, scan pitch p of image of the pinhole 14 is generally p < a, and resolution of the image of the sample caught by the camera 7b is apparently reduced. If a lens is inserted between the deflection beam splitter 2a and the camera 7b to increase the resolution, the light reflected from the sample and passed through the pinhole disk 10 are collected at one point by the lens and no image is formed since the lights are all parallel light. Further, if the Fresnel lens 13 accompanies the reduction of light amount such as a Fresnel zone plate, luminous utilization efficacy is worsened and very weak fluorescent light from the sample is decreased, resulting the decrease of sensitivity. Further, since the light collecting means such as the Fresnel lens 13 generally has a circular shape, there is a possibility that light between neighboring circles (Fresnel lens formed in the neighbor) arrives to the pinhole surface as it is and becomes surface reflection (stray light) from the pinhole surface, thereby inviting a problem of lowering the resolution.

Further developments solve this problem.

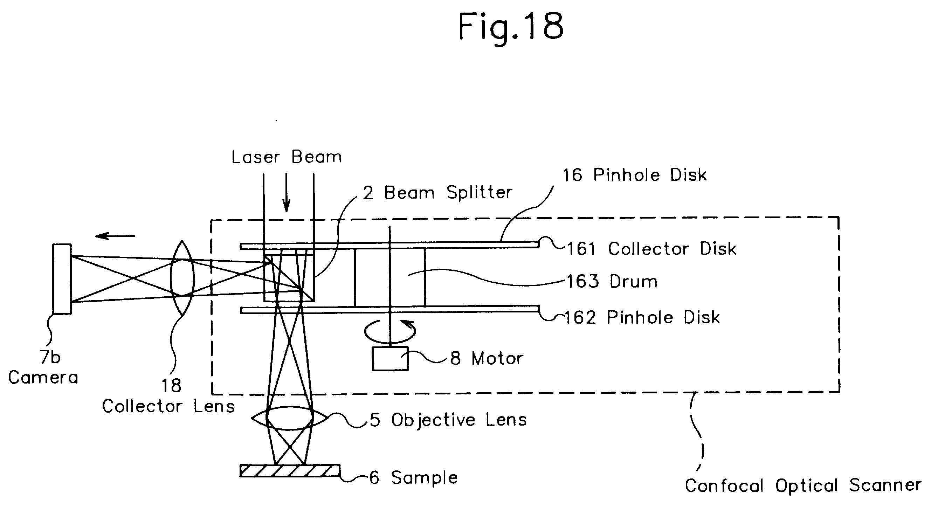

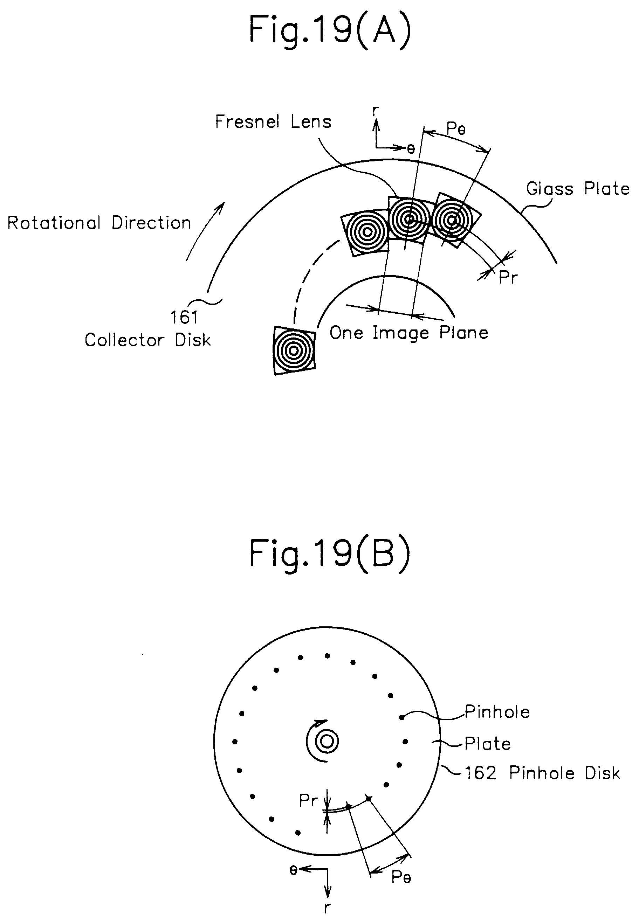

Fig. 18 illustrates a structure of such a further development of the confocal optical scanner according to the present invention used for a confocal microscope. In Fig. 18, the confocal optical scanner comprises a collector disk 161 on which a plurality of Fresnel lenses formed on one side of a glass plate shown in Fig. 19A are formed by drifting its focal position by Pr one by one in the radial direction by one image plane, a pinhole disk 162 on which a plurality of pinholes formed on a plate shown in Fig. 19B are formed by drifting by Pr (P θ in the circumferential direction) one by one in the radial direction, a pinhole disk 16 comprising a drum for connecting the collector disk 161 and the pinhole disk 162 so that the pinholes are disposed respectively at the focal position of the Fresnel lenses, a beam splitter 2 provided between the collector disk 161 and the pinhole disk 162 and a motor 8 for rotating the pinhole plate 16 with a constant speed. Both the collector disk 161 and the pinhole disk 162 may be easily fabricated by means of a semiconductor mask process and the like and the beam splitter 2 is held in a space by a support mechanism (not shown) provided in the right angle direction from a sheet surface and its transmission/reflection ratio is 50:50. An objective lens 5 irradiates output light from the pinholes to the sample 6 and is provided at position where the return light from the sample 6 enters again the pinholes. A collector lens 18 is provided at the position and focal distance where image of the pinhole may be formed on the camera 7b at the side of the confocal optical scanner.

In the structure as described above, the output light (it may be white light, not only laser light) from a laser light source (not shown) is input to the confocal optical scanner. The light input to the confocal optical scanner is collected by the Fresnel lens formed on the collector disk 161 of the pinhole plate 16 and is collected to the pinhole formed on the pinhole disk 162 transmitting through the beam splitter 2. The light transmitted through the pinhole is irradiated on the sample 6 by the objective lens 5. The return light from the sample 6 again passes through the objective lens 5 and the pinhole disk 162 and is reflected by the beam splitter 2 (bent in the right angle direction from the light axis direction of the incident light). Then the image of the sample 6 is formed on the camera 7b through the intermediary of the collector lens 18. In this embodiment, the pinhole plate 16 is rotated by the motor 8 with a constant speed, and the image of the pinhole scans the sample 6 due to the rotation of the pinhole plate 16. Further, since the pinhole on the pinhole disk 162 and light spot on the sample 6 (the image of pinhole) have a confocal relationship and both the incident light from the laser light source (not shown) and the reflected light from the sample 6 pass through the pinhole, high resolution may be obtained due to the confocal effect. Further, since the return light from the sample 6 does not pass through the collector disk 161, the confocal resolution obtained from the diameter of the pinhole may be maintained and even if the Fresnel lens is one through which the light amount decreases along the passage like a Fresnel zone plate, all the light amount of the return light may be received.

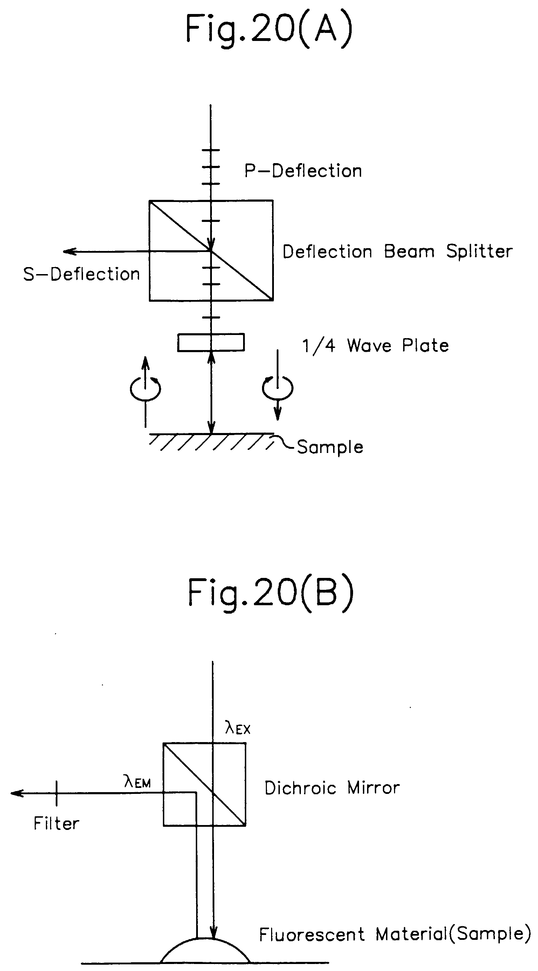

By the way, observation through eyes is possible if an eyepiece is mounted instead of the camera 3 in the aforementioned embodiment. Further, a deflection beam splitter may be used for the beam splitter 2 as shown in Fig. 20A and a 1/4 wave plate may be disposed between the pinhole disk 162 and the sample 6. If incident light is made to have p-deflection, the incident light passes through the deflection beam splitter. This light becomes circle deflection after passing through the 1/4 wave plate and when it is reflected by the sample 6 and again passes through the 1/4 wave plate, it becomes s-deflection and is reflected by the deflection beam splitter. The ratio of s : p may be 2 : 98 to 1 : 10000, so that the efficiency of the incident light and return light is improved. Further, the beam splitter 2 may be a dichroic mirror as shown in Fig. 20B and in this case, if a characteristic for transmitting incident light (exciting light λ_{EX}) and reflecting return light (fluorescent light λ_{EM}) from the sample (fluorescent substance) is given, exciting light λ_{EX} = 3 % and fluorescent light λ_{EM} = 80 % may be easily obtained with reflectance of the return light. If a filter for cutting the exciting light λ_{EX} is disposed at the side, higher S/N may be obtained.

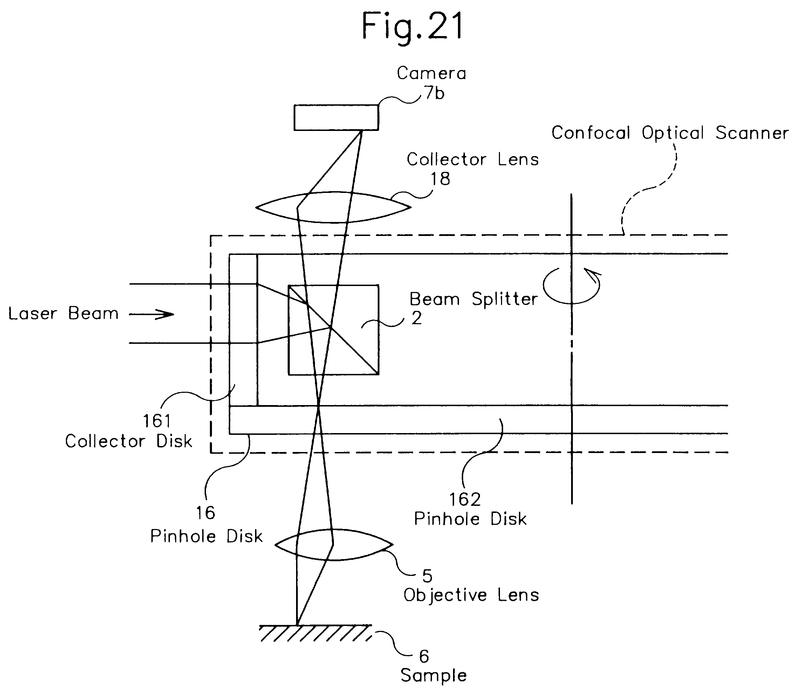

Fig. 21 is a modification of the confocal optical scanner in Fig. 18. The differences between the confocal optical scanner in Fig. 21 and Fig. 18 lie in that a pinhole disk 16a structuring the confocal optical scanner is constructed by the collector disk 161 disposed at the side and the pinhole disk 162 disposed at the bottom, the light path of the illumination light input to the collector disk 161 from the side of the pinhole disk 16a is bent in the right angle direction by the beam splitter 2 and is irradiated to the sample 6 through the pinhole disk 162 and that the return light from the sample 6 passes through the beam splitter 2 after passing through the pinhole disk 162 and images on the camera 7b through the intermediary of the 18.

Accordingly, also in this modification, both the incident light from a laser light source (not shown) and the return light from the sample 6 pass through the pinhole, so that high resolution may be obtained due to the confocal effect. Further, the return light from the sample 6 does not pass through the collector disk 161, so that the confocal resolution obtained from the diameter of the pinhole may be maintained.

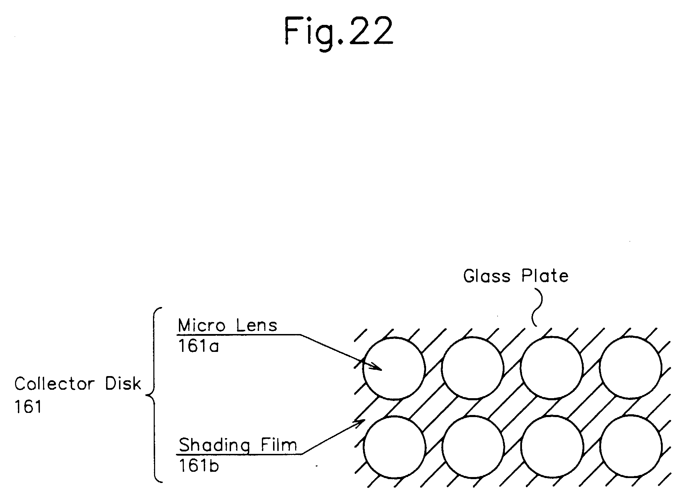

Fig. 22 is an enlarged structural drawing of another collector disk of the confocal optical scanner according to the present invention. In Fig. 22, a plurality of micro lenses 161a which is collector means are formed on a glass plate. Shading film 161b, for example Cr film (normally this has about 15 % of reflectance), having low transmittance is formed at portion where no micro lenses 161a are formed on the glass plate (at non-micro lens portion). In this case, since the area other than the micro lenses 161a of the collector disk 161 is shaded by Cr film, light irradiated to the area other than the micro lenses 161a among the light irradiated to the collector disk 161 is reflected by the shading film 161 and does not reach to the pinhole disk (not shown) and stray light which is surface reflection from the pinhole surface may be reduced. Moreover, since the shading film 161b is the glass plate in which the micro lenses 161a are formed, i.e. the glass itself has 4 % of reflectivity and since the light transmitting the non-micro lens portion is fully shaded by using a film having more than 4 % of reflectivity, the stray light from the pinhole disk may be reduced.

By the way, for the collector disk structuring the confocal optical scanner, a Fresnel zone plate composed of a plurality of patterns of variable density and phase difference disposed alternately and concentrically may be used though it accompanies reduction of light amount, or micro convex lens micro lens which is formed by using partial contraction of crystallized glass or a refractive index distributed plate micro lens which is formed by doping a material having a high refractive index into a plate having a low refractive index may be used. Further, for the shading film, emulsion film may be used other than Cr film.

Further, there may be provided a structure so that the return light from the sample is not input to the collector disk by arranging pinholes on the pinhole disk and arrangement of collector means as shown in the aforementioned first or second embodiment, so that the decrease of the resolution of the confocal point obtained by the pinhole diameter is prevented and imaging characteristics may be improved since the amount of return light from the sample is not decreased even if a collector disk which accompanies the decrease of light amount due to transmission is used. Further, since the shading film is formed at non-micro lens portion of the collector disk, surface reflection from the pinhole disk surface may be reduced and optical scanning without nonuniformity in brightness at inside and outside periphery of the pinhole disk may be realized. Furthermore, width of stripes caused by decentering may be reduced.

As described above, according to the confocal optical scanner of the present invention, it is apparent that:
(1) optical scanning without nonuniformity in brightness at inside and outside periphery of the pinhole disk is realized since pinholes are arrayed in equal pitch along the track of the spiral;
(2) since a confocal optical scanner in which stripes barely develop can be realized even if decentering is large, decentering may be easily adjusted and separation and exchange of the pinhole disk and motor become possible;
(3) more incident light may be collected to pinholes by structuring a confocal optical scanner using a pinhole disk on which the pinholes are disposed at focal positions of a plurality of collector means;
(4) since the use of collector means that focusses outside of aperture pupil width allows to reduce illumination area of light, luminous utilization efficacy may be improved further;
(5) since light illuminated to the surface of pinhole disk other than pinholes thereon is collected to the pinholes, reflected light from the pinhole disk surface can be reduced, stray light by the surface reflected light may be eliminated and a mechanism for eliminating the stray light may be simplified;
(6) since it is structured so that return light from a sample does not enter to a collector disk, the drop of confocal resolution obtained from pinhole diameter may be prevented and return light amount from the sample will not reduce even if such collector disk that accompanies reduction of light amount by transmission is used, thereby improving imaging characteristics; and
(7) since a shading film is formed at non-micro lens portion of a collector disk, surface reflection from pinhole disk surface may be reduced.

## Claims

1. Confocal optical scanner comprising a rotating pinhole disk (3) in which a plurality of pinholes (32) are formed to scan illumination light passing through said pinhole disk (3) onto a sample (6),
said plurality of pinholes (32) being formed in a plurality of lines outwardly extending from the center of said disk (3) and in a plurality of substantially concentric rows extending outwardly from said center, and said rows being spiral in shape,
characterized in that
the coordinate of the center of each pinhole as measured from the center of the disk satisfies the following equations:${\text{r}}_{\text{i}} {\text{= r}}_{\text{0}} {\text{+ θ}}_{\text{i}} \text{· m · a/2π}$${\text{θ}}_{\text{i}} {\text{= [2π/(m · a)] [-r}}_{\text{0}} {\text{+ √(r}}_{\text{0}} {\text{}}^{\text{2}} {\text{+ i · m · a}}^{\text{2}} \text{/π)]}$ wherein i = 0, 1, 2 ..., n, being the order from inside of the spiral, rᵢ = disk radius at ith pinhole; and r₀ = innermost disk radius; θᵢ = angle of ith pinhole; m = number of spirals; and a = pinhole pitch, such that a first pitch between adjacent lines is equal to a second pitch between adjacent rows as measured from the same pinhole.

2. Scanner of claim 1, characterized in that said pinholes (32) are positioned so that on an image plane the radius rᵢ of each row of pinholes differs from each other.

3. Scanner of claim 2, characterized in that numbers are assigned to said plurality of pinholes (32) with the pinholes located at a particular row being odd numbered and the pinholes located at a next adjacent outer row being even numbered, and wherein with a rotation of the disk (3), the radius rᵢ regularly decreases at said particular row and regularly increases at said next adjacent outer row.

4. Scanner of claim 1, 2 or 3, further comprising a plurality of collector means each having a focal point, and wherein said plurality of pinholes are disposed at the focal points of said plurality of collector means.

## Patentansprüche

1. Konfokaler optischer Scanner bzw. Abtaster, umfassend eine rotierende Feinloch- oder Lochblendenscheibe (3), in welcher zahlreiche Feinlöcher oder Lochblenden (32) geformt sind, um durch die Feinloch- oder Lochblendenscheibe (3) auf einen Prüfling (6) hindurchfallendes Beleuchtungslicht abzutasten bzw. mit einer Abtastbewegung zu führen,
wobei die zahlreichen Feinlöcher bzw. Lochblenden (32) in einer Anzahl von vom Zentrum der Scheibe (3) nach außen verlaufenden Linien und in einer Anzahl von im wesentlichen konzentrischen, vom Zentrum nach außen verlaufenden Reihen geformt sind und die Reihen eine Spiralform aufweisen,
dadurch gekennzeichnet, daß
die Koordinate des Zentrums jedes (jeder) Feinlochs bzw. Lochblende, vom Zentrum der Scheibe aus gemessen, den folgenden Gleichungen genügt:${\text{r}}_{\text{i}} {\text{= r}}_{\text{0}} {\text{+ θ}}_{\text{i}} \text{· m · a/2π}$${\text{θ}}_{\text{i}} {\text{= [2π/(m . a)] [-r}}_{\text{0}} {\text{+ √(r}}_{\text{0}} {\text{}}^{\text{2}} {\text{+ i · m · a}}^{\text{2}} \text{/π)]}$ worin bedeuten: i = 0, 1, 2, ..., n, gleich der Reihenfolge von der Innenseite der Spirale; rᵢ = Scheibenradius am (an der) i-ten Feinloch bzw. Lochblende; und r₀ = innerster Scheibenradius; θᵢ = Winkel des (der) i-ten Feinlochs bzw. Lochblende; m = Zahl der Spiralen; sowie a = Feinloch- bzw. Lochblenden(mitten)abstand, derart, daß ein erster (Mitten-)Abstand zwischen benachbarten Linien gleich einem zweiten (Mitten-)Abstand zwischen benachbarten Reihen, vom (von der) gleichen Feinloch bzw. Lochblende aus gemessen, ist.

2. Scanner nach Anspruch 1, dadurch gekennzeichnet, daß die Feinlöcher bzw. Lochblenden (32) so positioniert sind, daß auf einer Abbildungsebene die Radien rᵢ jeder Reihe von Feinlöchern bzw. Lochblenden voneinander verschieden sind.

3. Scanner nach Anspruch 2, dadurch gekennzeichnet, daß den zahlreichen Feinlöchern bzw. Lochblenden (32) Zahlen zugewiesen sind, wobei die an (in) einer bestimmten Reihe angeordneten Feinlöcher bzw. Lochblenden ungerade Zahlen tragen und die an (in) einer nächsten, anschließenden äußeren Reihe angeordneten Feinlöcher bzw. Lochblenden gerade Zahlen tragen, und wobei sich bei einer Drehung der Scheibe (3) der Radius rᵢ an der bestimmten Reihe regelmäßig verkleinert und sich an der nächsten, anschließenden äußeren Reihe regelmäßig vergrößert.

4. Scanner nach Anspruch 1, 2 oder 3, ferner umfassend eine Anzahl von Kollektormitteln mit jeweils einem Brennpunkt, wobei die zahlreichen Feinlöcher bzw. Lochblenden auf den Brennpunkten der mehreren Kollektormittel angeordnet sind.

## Revendications

1. Scanner optique confocal, comportant un disque tournant ajouré (3) dans lequel sont formés une pluralité d'orifices (32) pour projeter sur un échantillon (6) de la lumière d'illumination traversant ledit disque ajouré (3),
ladite pluralité d'orifices (32) étant formés suivant une pluralité de lignes s'étendant vers l'extérieur à partir du centre dudit disque (3), et suivant une pluralité de rangées essentiellement concentriques s'étendant vers l'extérieur à partir dudit centre, et lesdites rangées étant en forme de spirale,
caractérisé en ce que
les coordonnées du centre de chaque orifice, en mesure à partir du centre du disque, satisfont aux équations suivantes :${\text{r}}_{\text{i}} {\text{= r}}_{\text{0}} {\text{+ θ}}_{\text{i}} \text{· m · a/2π}$${\text{θ}}_{\text{i}} {\text{= [2π/(m · a)] [-r}}_{\text{0}} {\text{+ √(r}}_{\text{0}} {\text{}}^{\text{2}} {\text{+ i· m · a}}^{\text{2}} \text{/π)]}$ dans lesquelles i = 0, 1, 2, ., n, représentant l'ordre à partir de l'intérieur de la spirale, rᵢ = rayon du disque au i^{ème} orifice ; et r₀ = rayon du disque le plus intérieur ; Θ = angle du i^{ème} orifice ; m = nombre de spirales ; et a = pas des orifices, de sorte qu'un premier pas entre des lignes adjacentes est égal à un second pas entre des rangées adjacentes, en mesure à partir du même orifice.

2. Scanner de la revendication 1, caractérisé en ce que lesdits orifices (32) sont disposés de telle manière que, sur un plan image, le rayon rᵢ de chaque rangée d'orifices diffère de l'un à l'autre.

3. Scanner de la revendication 2, caractérisé en ce que des numéros sont assignés à ladite pluralité d'orifices (32), les orifices qui sont situés sur une rangée particulière étant numérotés impairs et les orifices qui sont situés sur une rangée extérieure adjacente suivante étant numérotés pairs, et dans lequel, pour une rotation du disque (3), le rayon rᵢ décroît régulièrement sur ladite rangée particulière et croît régulièrement sur ladite rangée extérieure adjacente suivante.

4. Scanner de la revendication 1, 2 ou 3, comportant au surplus une pluralité de moyens collecteurs comportant chacun un point focal, et dans lequel ladite pluralité d'orifices sont situés aux points focaux de ladite pluralité de moyens collecteurs.
